Europäisches Patentamt

(19) European Patent Office

Office européen des brevets

(11) Veröffentlichungsnummer: **0 083 357**
**B1**

(12) **EUROPÄISCHE PATENTSCHRIFT**

(45) Veröffentlichungstag der Patentschrift:
12.12.84

(51) Int. Cl.³: **B 23 B 27/22,** B 23 B 27/14

(21) Anmeldenummer: **82902158.3**

(22) Anmeldetag: **09.07.82**

(86) Internationale Anmeldenummer:
**PCT/DE 82/00145**

(87) Internationale Veröffentlichungsnummer:
**WO 83/00109** (20.01.83 Gazette 83/2)

(54) SCHNEIDPLATTE FÜR SPANABHEBENDE WERKZEUGE.

(30) Priorität: **10.07.81 FR 8113690**

(43) Veröffentlichungstag der Anmeldung:
**13.07.83 Patentblatt 83/28**

(45) Bekanntmachung des Hinweises auf die Patenterteilung:
**12.12.84 Patentblatt 84/50**

(84) Benannte Vertragsstaaten:
**AT BE CH DE FR GB LI LU NL SE**

(56) Entgegenhaltungen:
FR - A - 2 158 983
FR - A - 2 164 302
GB - A - 1 182 938

Machines and Tooling, Band 36, Nr. 12, 1965, Production Engineering Research Association, (Melton Mowbray, GB) V.V. Igoshin "Tools with chip-curling grooves", siehe Seiten 37 und 38; Figur 1a.
Machines and Tooling, Band 33, Nr, 4, 1962, Production Engineering Research Association (Melton Mowbray, GB) I.I. Bazhenov "Chipbreaker grooves and steps", siehe Seiten 42 bis 44; Seite 42 und Figur 1.

(73) Patentinhaber: **Feldmühle Aktiengesellschaft, Fritz-Vomfelde-Platz 4, D-4000 Düsseldorf 11 (DE)**

(72) Erfinder: **HABERT, Guy, 86 Rue Charles de Gaulle, Bondouffle F-91000 Every (FR)**
Erfinder: **KRAFT, Harald, Aspachstrasse 9, D-7336 Uhingen (DE)**

(74) Vertreter: **Uhlmann, Hans, Dr. rer.nat., Dipl.-Chem., Gladbacher Strasse 189, D-4060 Viersen 1 (DE)**

## Beschreibung

Die Erfindung betrifft eine Schneidplatte, insbesondere eine keramische Schneidplatte für spanabhebende Werkzeuge mit Deck- und Auflagefläche, die mit einer umlaufenden Fase und einer Spanformstufe versehen ist.

Schneidplatten der vorgenannten Art sind beispielsweise aus der DE-AS 1 552 360 und der DE-OS 2 252 349 bekannt. In der erstgenannten Schrift wird dabei eine Schneidplatte mit negativem Spanwinkel, in der zweiten auch eine solche mit positivem Spanwinkel beschrieben. Bei der Schneidplatte mit negativem Spanwinkel wird die Fase durch Einbringen einer Spanbrechernut in die Schneidplatte gebildet, d. h., daß die Fase in einer Ebene mit der Deck- bzw. Auflagefläche der Schneidplatte liegt. Obwohl also in der DE-AS 1 552 360 der Begriff Fase verwandt wird, ist eigentlich die Platte nicht angefast, es handelt sich vielmehr um einen stehengebliebenen Rand, der beim Einbringen der Spanbrechernut in die Schneidplatte erhalten blieb. Ein solcher Rand ist aber, insbesondere wenn die Schneidplatte aus gesinterter Oxidkeramik gefertigt wird, sehr anfällig gegen Ausbrüche, die zum vorzeitigen Ausfall der Schneidplatte führen.

Die Spanbrechernut weist einen sich von der Schneidkante zur Seitenmitte kontinuierlich vergrößernden Querschnitt auf, der das Abnehmen unterschiedlich starker Späne ermöglichen soll. Die Spanbrechernut als solche liegt jedoch in der Ebene der Deck- bzw. Auflagefläche, d. h., daß die Spanformung bei hohen Schnittgeschwindigkeiten von über 250 m/min nicht oder nur sehr mangelhaft beeinflußt werden kann. Bei den in der DE-OS 2 252 349 dargestellten Schneidplatten bildet die umlaufende Spanbrechernut einen positiven Schneidwinkel in den Fällen, in denen sie direkt an die Schneidkante stößt. Ist ihr eine Fase vorgelagert, so entsteht auch hier ein negativer Spanwinkel, wobei wie im Falle der DE-AS 1 552 360 die Spanbrechernut im wesentlichen in der Ebene der Deck- bzw. Auflagefläche verläuft. Damit tritt auch bei der in der DE-OS 2 552 349 beschriebenen Schneidplatte der gleiche Nachteil auf, d. h., daß die Spanformung bei hoher Schnittgeschwindigkeit nicht bzw. nicht optimal gelöst ist und außerdem die Gefahr des Kantenbruches an der Schneidkante bestehen bleibt.

Aus dem Artikel »Spanformen beim Drehen« ist eine Klassifizierung der einzelnen Spanformen in ungünstige, brauchbare und gute bekannt, wobei die Ausbildung dieser Späne von den verschiedensten Faktoren abhängt. Diese Faktoren sind im wesentlichen durch die Eigenschaften des zu zerspanenden Werkstoffes, die Bedingungen des Zerspanungsprozesses incl. der Schneidenausgestaltung und durch den Schneidstoff selbst gegeben. Bei gleichem zu zerspanenden Werkstoff und auch bei Beibehaltung des gleichen Werkzeuges ändert sich der Span jedoch, wenn Vorschub und/oder Zustellung geändert werden in einem so starken Maße, daß ggf. die Spanabfuhr nicht mehr gewährleistet ist und der Zerspanungsvorgang daher abgebrochen oder unterbrochen werden muß.

Die bisher üblichen Schnittgeschwindigkeiten, wie sie mit Hartmetallen erreicht werden können, liegen unter 250 m/min, wenn man von unbeschichteten Hartmetallen ausgeht. Mit der Erhöhung der Schnittgeschwindigkeit tritt als Problem die Beherrschung der Spanformung beim Schlichten auf, da in der Zeiteinheit ein größeres Spanvolumen anfällt, das abgeführt werden muß. Ungünstige Spanformen stellen für die Werkstückoberflächenqualität, das Werkzeug, die Werkzeugmaschine und nicht zuletzt für das Bedienungspersonal erhebliche Gefahren dar. Die Beschädigungen bewirken Maschinenstillstandszeiten, Anfall von Ausschußteilen und Teilen mit verminderter Oberflächengüte.

Der vorliegenden Erfindung liegt damit die Aufgabe zu Grunde, die Spanformung beim Schlichten so zu beeinflussen, daß mit einem Werkzeug eine Vielzahl von Materialien bei einer Vielzahl von Schneidbedingungen zerspant werden kann, ohne daß ungünstige Spanformung auftritt, die eine Stillsetzung des Zerspanungsaggregates erforderlich macht.

Gelöst wird diese Aufgabe durch eine Schneidplatte, insbesondere eine keramische Schneidplatte für spanabhebende Werkzeuge mit im wesentlichen parallelen Deck- und Auflageflächen, die mit einer umlaufenden Fase und einer Spanformstufe versehen ist, die das kennzeichnende Merkmal aufweist, daß die Fase unter einem Winkel von 15 bis 35 Grad gegenüber der Deckfläche verläuft, eine Breite von 0,05 bis 0,4 mm aufweist und sich an diese Fase eine Hohlkehle anschließt, die einen kreisabschnittförmigen Querschnitt besitzt, dessen Sehne unter einem Winkel von 15 bis 35 Grad zur Deck- bzw. Auflagefläche verläuft.

Die so ausgestaltete Schneidplatte weist gegenüber dem Stand der Technik einige grundlegende Unterschiede auf. So ist zunächst die den Span formende Hohlkehle nicht in die ebene Deck- oder Auflagefläche der Schneidplatte eingebracht, sondern bildet, da sie ebenfalls unter einem Winkel verläuft, eine Fortsetzung der umlaufenden Schutzfase, wobei sie, d. h. ihre Sehne, gegenüber der Schutzfase einen von 180 Grad abweichenden Winkel bilden kann.

Die Länge der Sehne des kreisabschnittförmigen Querschnitts der Hohlkehle beträgt gemäß einer bevorzugten Ausgestaltung der Erfindung 0,5 bis 1,5 mm. Die Hohlkehle als solche ist also außerordentlich schmal, ebenso wie die ihr vorgelagerte Fase sehr schmal ist. Man kann damit die Hohlkehle als Teil der umlaufenden Fase auffassen, d. h. also, daß die Schneidplatte mit einer spanformenden Fase ausgerüstet ist.

Durch das Verlagern der Spanformung von der Deckfläche der Schneidplatte in die Fase ist es möglich, auch bei sehr hohen Schnittgeschwindigkeiten, die 250 m/min bei weitem übersteigen und in die Bereiche von 800 m/min gehen, eine gezielte Spanformung zu erreichen. Als weiterer Vorteil ergibt sich, daß über praktisch den gesamten Bereich von 250 bis 800 m/min Schnittgeschwindigkeit brauchbare bis gute Späne erhalten werden, d. h., daß mit einer Schneidengeometrie bei den unterschiedlichsten Schnittgeschwindigkeiten gearbeitet werden kann und trotzdem leicht abführbare Späne erhalten werden. Des weiteren werden auf Grund dieser Geometrie brauchbare Späne. Bei den unterschiedlichsten Stählen erzielt, d. h. die Geometrie dieser Schneide ist einsetzbar für einfachen Baustahl bis zum legierten Stahl.

Eine vorteilhafte Ausgestaltung der Erfindung sieht vor, daß der Radius der Hohlkehle 0,6 bis 2,5 mm beträgt. Dieser Radius richtet sich selbstverständlich nach der Größe der vorangehenden Fase, d. h. daß ein kleiner Hohlkehlenradius einer schmalen Fase zugeordnet wird und ein großer Hohlkehlenradius einer breiteren Fase. Damit ergibt sich automatisch auf der einen Seite eine Schneidplatte, die zum Schlichten bzw. Feinschlichten eingesetzt wird, auf der anderen Seite eine solche, die für Schrupparbeiten hervorragend geeignet ist.

Eine besonders bevorzugte Ausgestaltung der Erfindung sieht vor, daß die Hohlkehle im Eckenbereich unter Stehenlassen einer Nase ausläuft. Das Auslaufen erfolgt dabei in dem Bereich der Ecke, der durch eine Fase abgerundet ist, wodurch zweierlei erreicht wird.

Erstens ergibt sich auf Grund des Stehenbleibens der Nase eine erhöhte Festigkeit der Schneidplatte in dem Bereich, der am stärksten beansprucht wird, zweitens ergibt sich eine zusätzliche Umleitung des Spanes und damit eine Spanformung, die die Bildung brauchbarer bzw. guter Späne begünstigt.

Zur Beurteilung der Spanformung wurde in einer Versuchsreihe eine erfindungsgemäße Schneidplatte aus gesinterter Oxidkeramik einer serienmäßigen Schneidplatte aus Oxidkeramik mit üblicher, umlaufender Fase gegenübergestellt. Als zu zerspanender Werkstoff wurden die Materialien CK 45, 16 MN CR5 und 42 CRMO$_4$ ausgewählt, da durch diese Palette praktisch das gesamte Feld üblicher spanabhebend bearbeiteter Stähle abgedeckt wird. Beide Schneidplatten waren quadratische Schneidplatten. Die Fase der serienmäßigen Schneidplatte wies 0,3 mm Breite auf und war unter einem Winkel von 30 Grad angeordnet. Die erfindungsgemäße Schneidplatte verfügte über eine Fase von 0,16 mm, die unter einem Winkel von 30 Grad zur Spanfläche, also der Deckfläche angeordnet war. Die angrenzende Hohlkehle besaß einen Radius von 0,9 ± 0,1 mm, die Länge der Sehne betrug 0,54 mm. Die Hohlkehlen liefen in den Ecken aus, so daß eine Nase gebildet wurde. Als Einstellwinkel KAPPA wurden 45 Grad und 93 Grad gewählt. Als Schnittgeschwindigkeiten wurden 250, 350, 500 und 800 m/min gefahren. Parallelversuche mit rhombischen und dreieckigen Schneidplatten ergaben praktisch die gleichen Werte, die mit den quadratischen Platten erhalten wurden.

Die Tabellen 1 bis 4 geben darüber Aufschluß, bei welchen Schnittbedingungen welche Spanformen auftreten. Die einzelnen Spanformen sind von 1 bis 10 beziffert und in Fig. 16 der Zeichnungen dargestellt. In Tabelle 1 sind die Werte für die erfindungsgemäße Schneidplatte unter einem Einstellwinkel KAPPA von 93 Grad wiedergegeben, in Tabelle 2 die Werte unter einem Einstellwinkel KAPPA von 45 Grad. Analog zeigt Tabelle 3 die Ergebnisse bei Verwendung einer Standardschneidplatte aus Keramik, mit KAPPA 93 Grad und die Tabelle 4 die Ergebnisse bei KAPPA 45 Grad.

Die Spanformversuche sind in den Diagrammen Fig. 11 bis Fig. 15 dargestellt und lassen folgendes schließen:

a) Stichversuche bei CK 45 und 16 MnCr 5 lassen darauf schließen, daß die Ergebnisse von 42 CrMo 4 als repräsentativ angesehen werden können und für vergleichbare Stahlsorten übernommen werden können.

b) Im Gegensatz zu den Standardfasen ist die Spanformfase in ihrem Wirkungsbereich (v = 200—500 m/min) unabhängig von der Schnittgeschwindigkeit. Über v = 500 m/min verliert die Spanformfase ihre Wirkung.

c) Die Funktion der Spanformfase ist unabhängig von der Schneidplattenform. Ausschlaggebend für ihre Funktion ist der Eckenradius.
Bei r = 0,4; 0,8 und 1,2 wurden gute Ergebnisse erreicht, und zwar mit leichten Vorteilen für kleinere Eckenradien.
Bei r = 1,6 ist die Spanformfase nicht mehr wirkungsvoll und ist nicht mehr zu empfehlen.

d) Nachdem a = r hat der Einstellwinkel keinen entscheidenden Einfluß auf das Spanformverhalten der Spanformfase.

Das Verschleißverhalten der Spanformfase im Vergleich zur Standardfase 0,3 × 30° hat ergeben, daß bei 16 min (Standweg 8 km) beide Fasen vergleichbare Verschleißmarkenbreiten aufweisen. Das Spanformverhalten der Spanformfase blieb gleich über den gesamten Standwegbereich.

Tabelle I

| Material | Kappa 93° V-250 | | | | V-350 | | | | V-500 | | | | V-800 | | | |
|---|---|---|---|---|---|---|---|---|---|---|---|---|---|---|---|---|
| CK 45 | 0,25 | 6 | 6 | — | 0,25 | 6 | 6 | — | 0,25 | 6 | 6 | — | 0,25 | 3 | 4 | 8 |
|  | 0,2 | 6 | 6 | 6 | 0,2 | 6 | 6 | 6 | 0,2 | 6 | 6 | — | 0,2 | 2 | 4 | 8 |
|  | 0,15 | 4 | 6 | 6 | 0,15 | 6 | 6 | 6 | 0,15 | 6 | 6 | 6 | 0,15 | 1 | 1 | 9 |
|  | s/a | 0,2 | 0,3 | 0,5 | s/a | 0,2 | 0,3 | 0,5 | s/a | 0,2 | 0,3 | 0,5 | s/a | 0,2 | 0,3 | 0,5 |
| 16 Mn Cr5 | 0,25 | 6 | 6 | — | 0,25 | 6 | 6 | — | 0,25 | 6 | 6 | — | 0,25 | 3 | 4 | 8 |
|  | 0,2 | 4 | 6 | 6 | 0,2 | 4 | 6 | 7 | 0,2 | 6 | 6 | — | 0,2 | 2 | 4 | 8 |
|  | 0,15 | 4 | 4 | 6 | 0,15 | 4 | 6 | 6 | 0,15 | 4 | 6 | 6 | 0,15 | 1 | 1 | 9 |
|  | s/a | 0,2 | 0,3 | 0,5 | s/a | 0,2 | 0,3 | 0,5 | s/a | 0,2 | 0,3 | 0,5 | s/a | 0,2 | 0,3 | 0,— |
| 42 CrMo 4 | 0,25 | 4 | 6 | 6 | 0,25 | 6 | 6 | — | 0,25 | 6 | 6 | — | 0,25 | 3 | 4 | 8 |
|  | 0,2 | 4 | 4 | 6 | 0,2 | 4 | 6 | 6 | 0,2 | 4 | 6 | — | 0,2 | 2 | 4 | 8 |
|  | 0,15 | 1 | 4 | 6 | 0,15 | 2 | 4 | 4 | 0,15 | 4 | 4 | 8 | 0,15 | 1 | 1 | 9 |
|  | s/a | 0,2 | 0,3 | 0,5 | s/a | 0,2 | 0,3 | 0,5 | s/a | 0,2 | 0,3 | 0,5 | s/a | 0,2 | 0,3 | 0,5 |

0 083 357

Tabelle II

| Material | Kappa 45° V-250 | | | | V-350 | | | | V-500 | | | | V-800 | | | |
|---|---|---|---|---|---|---|---|---|---|---|---|---|---|---|---|---|
| CK 45 | 0,25 | 8 | 6 | — | 0,25 | 8 | 6 | — | 0,25 | 6 | 6 | — | 0,25 | 6 | 6 | — |
|  | 0,2 | 8 | 6 | 8 | 0,2 | 8 | 6 | 8 | 0,2 | 7 | 6 | — | 0,2 | 7 | 6 | — |
|  | 0,15 | 8 | 8 | 8 | 0,15 | 8 | 8 | 8 | 0,15 | 8 | 7 | 8 | 0,15 | 8 | 7 | 8 |
|  | s/a | 0,2 | 0,3 | 0,5 | s/a | 0,2 | 0,3 | 0,5 | s/a | 0,2 | 0,3 | 0,5 | s/a | 0,2 | 0,3 | 0,5 |
| 16 Mn Cr5 | 0,25 | 8 | 8 | — | 0,25 | 8 | 8 | — | 0,25 | 8 | 6 | — | 0,25 | 8 | 6 | — |
|  | 0,2 | 8 | 8 | 8 | 0,2 | 8 | 8 | 8 | 0,2 | 8 | 8 | — | 0,2 | 8 | 8 | — |
|  | 0,15 | 8 | 8 | 8 | 0,15 | 8 | 8 | 8 | 0,15 | 8 | 8 | 8 | 0,15 | 8 | 8 | 8 |
|  | s/a | 0,2 | 0,3 | 0,5 | s/a | 0,2 | 0,3 | 0,5 | s/a | 0,2 | 0,3 | 0,5 | s/a | 0,2 | 0,3 | 0,— |
| 42 CrMo 4 | 0,25 | 8 | 8 | — | 0,25 | 8 | 8 | — | 0,25 | 6 | 8 | — | 0,25 | 6 | 8 | — |
|  | 0,2 | 8 | 8 | 8 | 0,2 | 8 | 8 | 8 | 0,2 | 6 | 6 | — | 0,2 | 6 | 6 | — |
|  | 0,15 | 3 | 6 | 8 | 0,15 | 3 | 6 | 8 | 0,15 | 9 | 6 | 3 | 0,15 | 9 | 6 | 3 |
|  | s/a | 0,2 | 0,3 | 0,5 | s/a | 0,2 | 0,3 | 0,5 | s/a | 0,2 | 0,3 | 0,5 | s/a | 0,2 | 0,3 | 0,5 |

0 083 357

Tabelle III

| Material | Kappa 93° V-250 | | | | V-350 | | | | V-500 | | | | V-800 | | | |
|---|---|---|---|---|---|---|---|---|---|---|---|---|---|---|---|---|
| CK 45 | 0,25 | 1 | 1 | 3 | 0,25 | 1 | 1 | 3 | 0,25 | 1 | 1 | 6 | 0,25 | 1 | 1 | 6 |
| | 0,2 | 1 | 1 | 1 | 0,2 | 1 | 1 | 1 | 0,2 | 1 | 1 | 2 | 0,2 | 1 | 1 | 2 |
| | 0,15 | 1 | 1 | 1 | 0,15 | 1 | 1 | 1 | 0,15 | 1 | 1 | 1 | 0,15 | 1 | 1 | 1 |
| | s/a | 0,2 | 0,3 | 0,5 | s/a | 0,2 | 0,3 | 0,5 | s/a | 0,2 | 0,3 | 0,5 | s/a | 0,2 | 0,3 | 0,5 |
| 16 Mn Cr5 | 0,25 | 1 | 1 | 3 | 0,25 | | | 3 | 0,25 | 1 | 1 | 6 | 0,25 | 1 | 1 | 6 |
| | 0,2 | 1 | 1 | 1 | 0,2 | | | 1 | 0,2 | 1 | 1 | 2 | 0,2 | 1 | 1 | 2 |
| | 0,15 | 1 | 1 | 1 | 0,15 | | | 1 | 0,15 | 1 | 1 | 1 | 0,15 | 1 | 1 | 1 |
| | s/a | 0,2 | 0,3 | 0,5 | s/a | 0,2 | 0,3 | 0,5 | s/a | 0,2 | 0,3 | 0,5 | s/a | 0,2 | 0,3 | 0,— |
| 42 CrMo 4 | 0,25 | 1 | 1 | 3 | 0,25 | | | | 0,25 | 1 | 1 | 6 | 0,25 | 1 | 1 | 6 |
| | 0,2 | 1 | 1 | 1 | 0,2 | | | | 0,2 | 1 | 1 | 2 | 0,2 | 1 | 1 | 2 |
| | 0,15 | 1 | 1 | 1 | 0,15 | | | | 0,15 | 1 | 1 | 1 | 0,15 | 1 | 1 | 1 |
| | s/a | 0,2 | 0,3 | 0,5 | s/a | 0,2 | 0,3 | 0,5 | s/a | 0,2 | 0,3 | 0,5 | s/a | 0,2 | 0,3 | 0,5 |

0 083 357

Tabelle IV

Kappa 45°

| Material | s / a | V-250 | | | V-350 | | | V-500 | | | V-800 | | |
|---|---|---|---|---|---|---|---|---|---|---|---|---|---|
| | | 0,2 | 0,3 | 0,5 | 0,2 | 0,3 | 0,5 | 0,2 | 0,3 | 0,5 | 0,2 | 0,3 | 0,5 |
| CK 45 | 0,25 | 1 | 1 | 6 | 1 | 1 | 6 | 1 | 1 | 6 | 1 | 1 | 6 |
| | 0,2 | 1 | 1 | 2 | 1 | 1 | 2 | 1 | 1 | 2 | 1 | 1 | 1 |
| | 0,15 | 1 | 1 | 1 | 1 | 1 | 1 | 1 | 1 | 1 | 1 | 1 | 1 |
| | s/a | | | | | | | | | | | | |
| 16 Mn Cr5 | 0,25 | 1 | 1 | 6 | 1 | 1 | 6 | 1 | 1 | 6 | 1 | 1 | 8 |
| | 0,2 | 1 | 1 | 2 | 1 | 1 | 2 | 1 | 1 | 2 | 1 | 1 | 1 |
| | 0,15 | 1 | 1 | 1 | 1 | 1 | 1 | 1 | 1 | 1 | 1 | 1 | 1 |
| | s/a | | | | | | | | | | 0,— | | |
| 42 CrMo 4 | 0,25 | 1 | 1 | 6 | 1 | 1 | 6 | 1 | 1 | 6 | 1 | 1 | 8 |
| | 0,2 | 1 | 1 | 2 | 1 | 1 | 2 | 1 | 1 | 2 | 1 | 1 | 1 |
| | 0,15 | 1 | 1 | 1 | 1 | 1 | 1 | 1 | 1 | 1 | 1 | 1 | 1 |
| | s/a | | | | | | | | | | | | |

Die Erfindung wird nachstehend an Hand der Zeichnungen erläutert. Die

Fig. 1, 3, 5, 7 und 9 zeigen eine Seitenansicht im Schnitt des Eckenbereiches einer rechteckigen Schneidplatte;

Fig. 1a zeigt perspektivisch den Eckbereich gemäß Fig. 1; die

Fig. 2, 4, 6, 8 und 10 jeweils die zugehörige Draufsicht;

Fig. 9a zeigt perspektivisch den Eckbereich gemäß Fig. 9; die

Fig. 11 bis 15 zeigen Spanformdiagramme, die

Fig. 16 die Spanformklassifizierung.

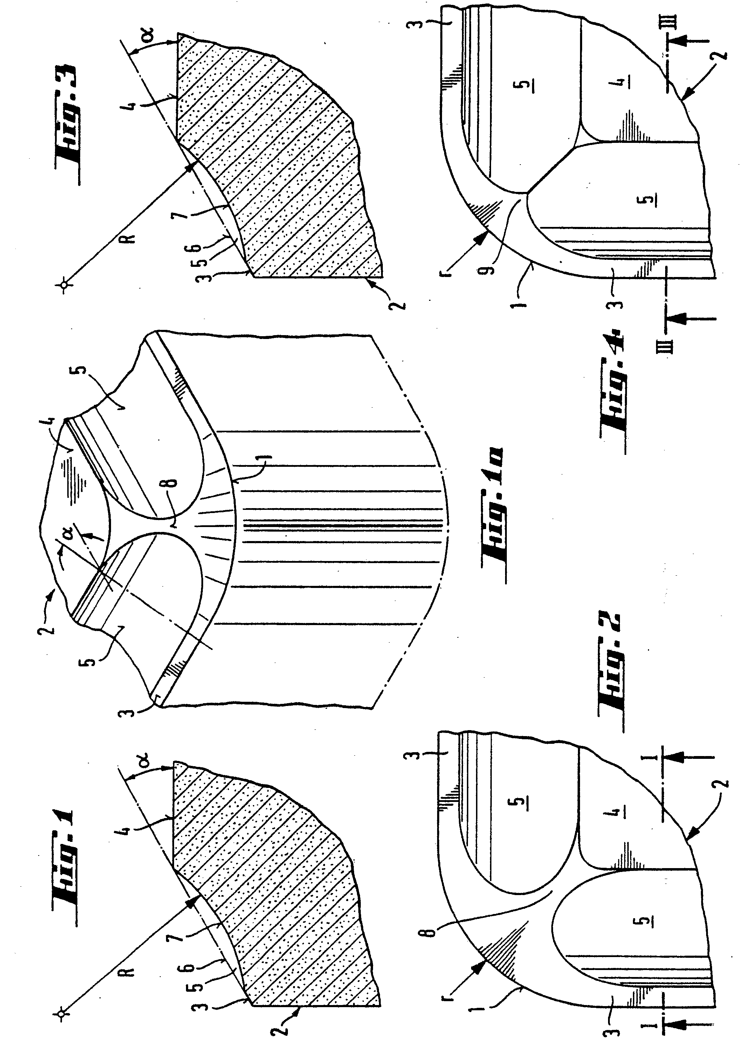

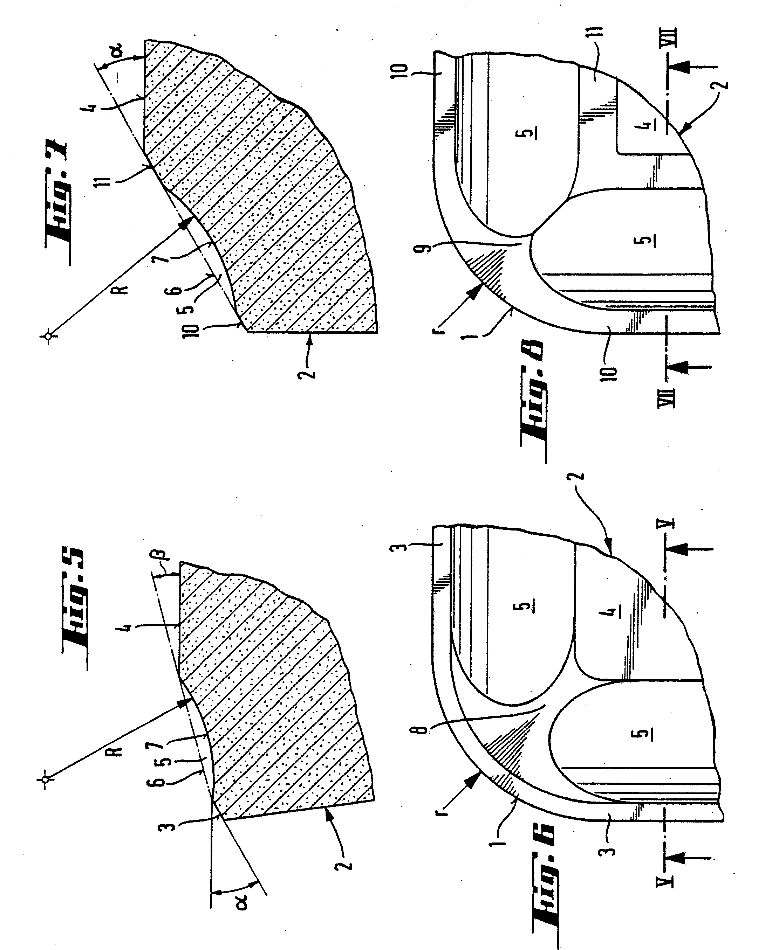

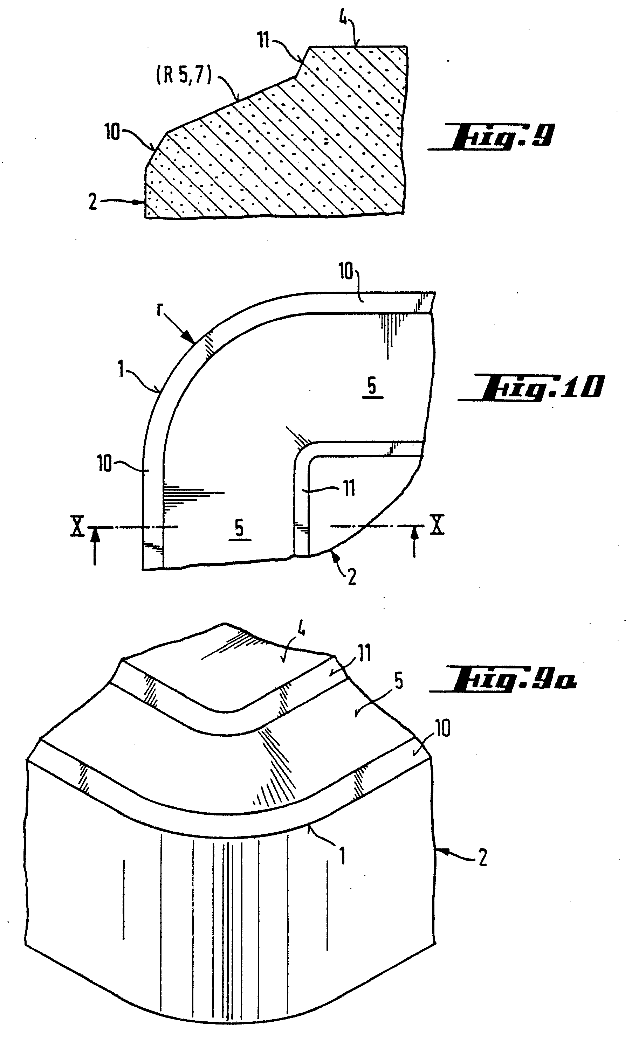

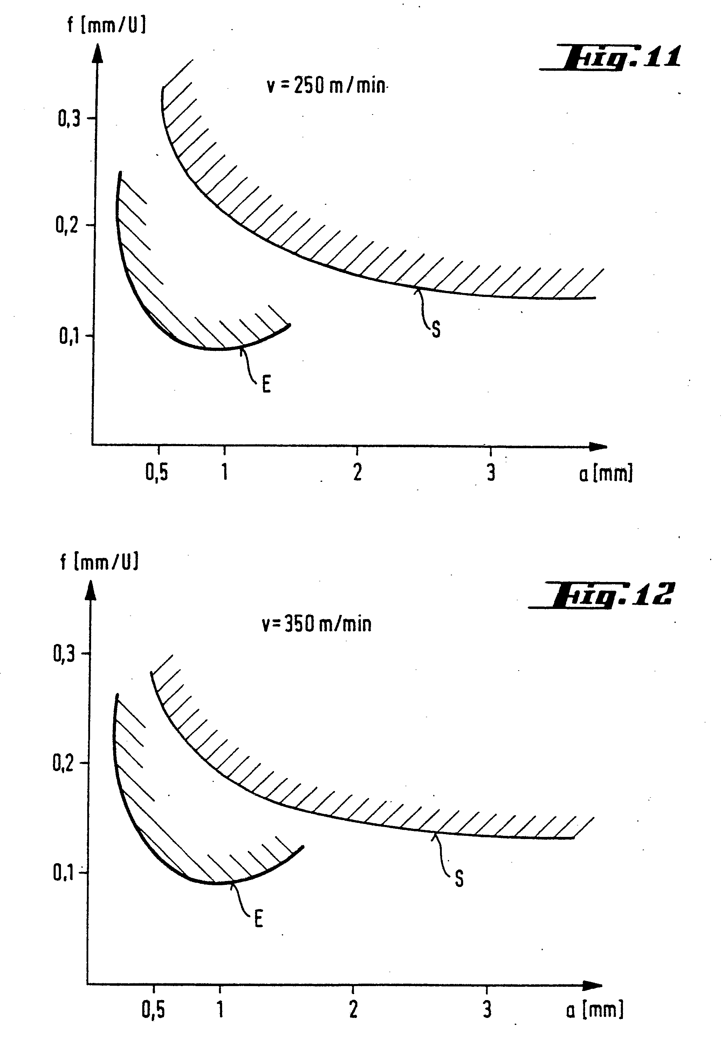

Die Ecke 1 einer rechteckigen Schneidplatte 2 ist mit einem Eckenradius r abgerundet, wobei r in Fig. 1 1,2 mm beträgt. Andere Radien r sind in den weiteren Figuren dargestellt. Die Fase 3 läuft entlang der Deckfläche 4 um die gesamte Schneidplatte 2 und weist eine Breite von 0,16 mm auf. Sie ist unter einem Winkel $\alpha$ von 30 Grad zur Deckfläche eingebracht und von dieser durch die Hohlkehle 5 getrennt. Die Hohlkehle 5 weist einen Radius r von 0,9 mm auf. Die Sehne 6 des Kreisabschnittes 7, der den Querschnitt der Hohlkehle 5 bildet, weist eine Länge von 0,54 mm auf und verläuft, wie in den Fig. 1, 3 und 7 dargestellt, unter dem gleichen Winkel $\alpha$ wie die Fase 3.

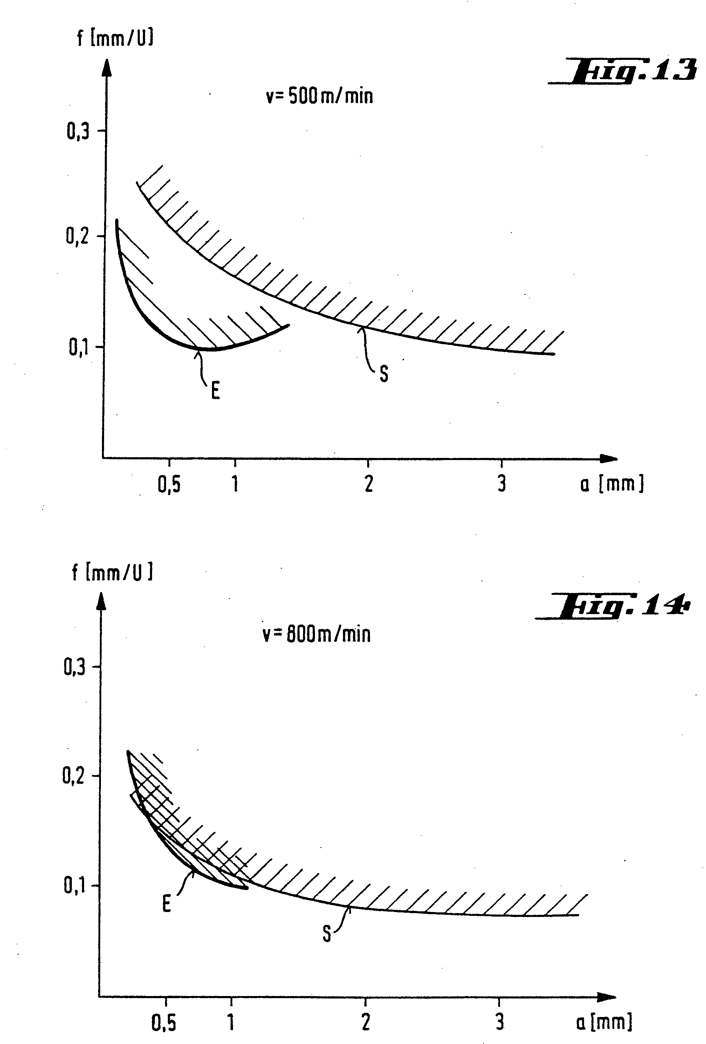

Fig. 2 und 6 zeigen, daß die Hohlkehlen 5 im Bereich der Ecke 1 auslaufen und dadurch die Nase 8 bilden. Die Ausbildung der Nase 8 wird ferner durch den Eckenradius r bestimmt, der zwischen 0,2 und 1,6 mm liegt. Außerhalb dieser Bemessung ist praktisch keine Beeinflussung der Spanform möglich.

Bei den Fig. 4 und 8 hingegen überschneiden sich die Hohlkehlen 5 in der Ecke 1, wodurch ein Nasenansatz 9 gebildet wird.

Fig. 5 zeigt, daß die Sehne 6 des Kreisabschnittes 7 unter einem flacheren Winkel $\beta$ verläuft als die Fase 3, die unter einem Winkel $\alpha$ von 30 Grad verläuft. Der Winkel $\beta$ beträgt in diesem Fall 15 Grad.

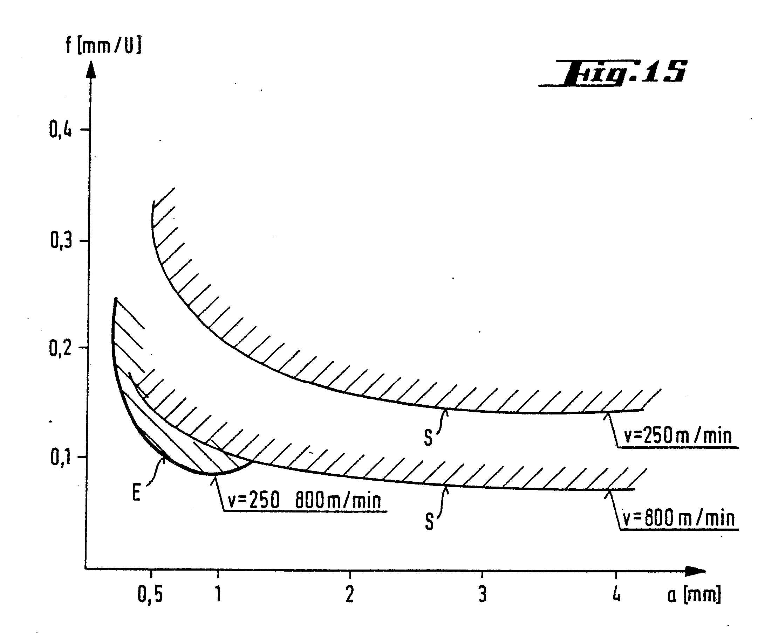

In den Fig. 7 und 8 ist die Fase 3 in einen unteren Fasenanteil 10 und einen oberen Fasenanteil 11 aufgeteilt, zwischen dem die Hohlkehle 5 eingebettet ist. Die Sehne 6 und die Fasenanteile 10 und 11 verlaufen dabei unter dem gleichen Winkel von $\alpha = 30$ Grad.

Die Fig. 9 und 10 zeigen ebenfalls die in den unteren Fasenanteil 10 und den oberen Fasenanteil 11 unterteilte Anfasung der Schneidplatte. Der Radius R des Kreisabschnittes 7 ist hierbei jedoch unendlich, so daß Sehne und Kreisabschnitt aufeinanderfallen und eine Gerade bilden.

Die Fig. 11 bis 14 zeigen Spanformdiagramme, die am Material 42 CRMO$_4$ aufgenommen wurden, wobei bei

Fig. 11 die Schnittgeschwindigkeit 250 m/min, bei

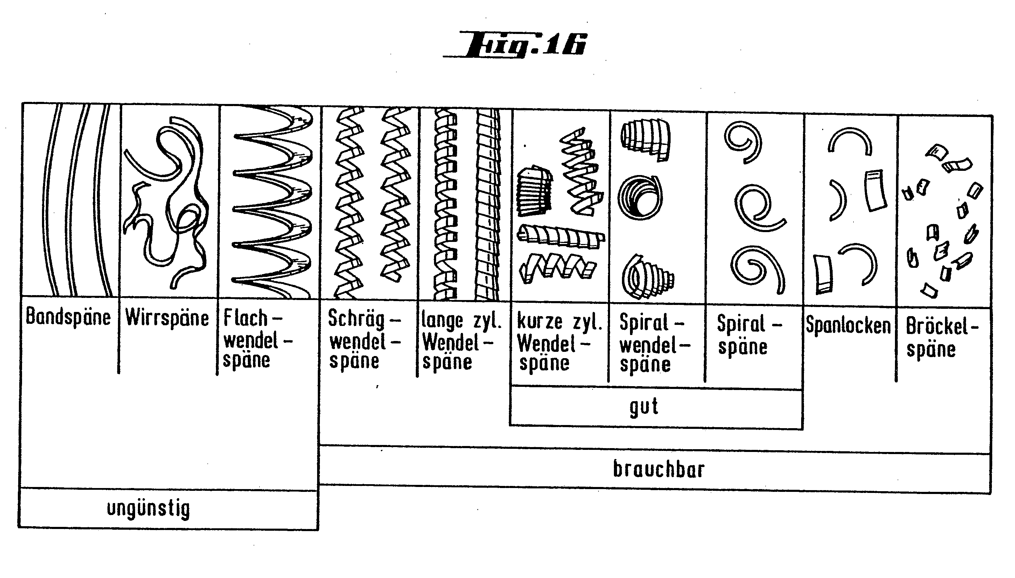

Fig. 12 350 m/min, bei
Fig. 13 500 m/min und bei
Fig. 14 800 m/min betrug.

Die Kurve S gibt dabei ein Spanformdiagramm einer handelsüblichen Schneidplatte mit Standardschutzfase wieder, die Kurve E das bei der gleichen Geschwindigkeit aufgezeichnete Diagramm der erfindungsgemäßen Schneidplatte. In Fig. 15 sind diese Kurven zusammengezeichnet, woraus sich ergibt, daß bei den Kurven S der handelsüblichen Schneidplatte mit Standardschutzfase es zwischen 250 und 800 m/min eine erhebliche Abweichung gibt, d. h. also, daß die Spanformen erheblich streuen, wohingegen bei der erfindungsgemäßen Schneidplatte sich im Bereich dieser Geschwindigkeiten nur eine sich deckende Kurve E ergibt.

## Patentansprüche

1. Schneidplatte, insbesondere keramische Schneidplatte für spanabhebende Werkzeuge mit im wesentlichen parallelen Deck- und Auflageflächen, die mit einer umlaufenden Fase und einer Spanformstufe versehen ist, dadurch gekennzeichnet, daß die Fase (3) unter einem Winkel ($\alpha$) von 15 bis 35 Grad gegenüber der Deckfläche (4) verläuft, eine Breite von 0,05 bis 0,4 mm aufweist und sich an diese Fase eine Hohlkehle (5) anschließt, die einen kreisabschnittförmigen Querschnitt besitzt, dessen Sehne (6) unter einem Winkel ($\beta$) von 15 bis 35 Grad zur Deck- (4) bzw. Auflagefläche verläuft.

2. Schneidplatte nach Anspruch 1, dadurch gekennzeichnet, daß die Länge der Sehne (6) 0,5 bis 1,5 mm beträgt.

3. Schneidplatte nach einem der Ansprüche 1 und 2, dadurch gekennzeichnet, daß der Radius (R) der Hohlkehle (5) 0,6 bis 2,5 mm beträgt.

4. Schneidplatte nach einem der Ansprüche 1 bis 3, dadurch gekennzeichnet, daß die Hohlkehle (5) im Eckenbereich unter Stehenlassen einer Nase (8) ausläuft.

## Claims

1. Cutting tip, especially a ceramic cutting tip for cutting-tools having substantially parallel top and bearing surfaces, which is provided with an encircling bevel and a shaping stage for the chip,

**0 083 357**

characterised in that the bevel (3) runs at an angle ($\alpha$) of from 15 to 35 degrees with respect to the top surface (4) and has a width of from 0.05 to 0.4 mm and that adjacent to this bevel there is a channel (5) which has a cross-section in the form of a segment of a circle, the chord (6) of which runs at an angle ($\beta$) of from 15 to 35 degrees with respect to the top (4) or bearing surface.

2. Cutting tip according to claim 1, characterised in that the length of the chord (6) is from 0.5 to 1.5 mm.

3. Cutting tip according to one of claims 1 and 2, characterised in that the radius (R) of the channel (5) is from 0.6 to 2.5 mm.

4. Cutting tip according to one of claims 1 to 3, characterised in that the channel (5) runs out in the corner region to leave a nose (8).


**Revendications**

1. Plaquette de coupe, notamment plaquette de coupe en céramique pour outils d'usinage par enlèvement de copeaux, cette plaquette comportant une face d'appui et une face supérieure sensiblement parallèles, une facette périmétrique et un épaulement de formage de copeau, caractérisée par le fait que la facette (3) est inclinée d'un angle ($\alpha$) de 15° à 35° par rapport à la face supérieure (4), possède une largeur de 0,05 à 0,4 mm, et par le fait qu'à cette facette se raccorde une gorge (5) possédant une section droite en forme de portion de cercle dont la corde (6) est inclinée d'un angle ($\beta$) de 15° à 35° par rapport à la face supérieure (4) ou à la face d'appui.

2. Plaquette de coupe selon la revendication 1, caractérisée par le fait que la longueur de la corde (6) est de 0,5 à 1,5 mm.

3. Plaquette de coupe selon l'une quelconque des revendications 1 et 2, caractérisée par le fait que le rayon (R) de la gorge (5) est de 0,6 à 2,5 mm.

4. Plaquette de coupe selon l'une quelconque des revendications 1 à 3, caractérisée par le fait que la gorge (5) se termine dans la zone du coin, en laissant subsister un bec (8).

9

**Fig.3**

**Fig.4**

**Fig.1a**

**Fig.1**

**Fig.2**

11

Fig. 5

Fig. 6

Fig. 7

Fig. 8

**Fig. 9**

**Fig. 10**

**Fig. 9a**

**Fig.11**

f [mm/U]

v = 250 m/min

0,3

0,2

0,1

S

E

0,5  1  2  3  a [mm]

**Fig.12**

f [mm/U]

v = 350 m/min

0,3

0,2

0,1

S

E

0,5  1  2  3  a [mm]

f [mm/U]

**Fig.13**

v = 500 m/min

0,3

0,2

0,1

E

S

0,5    1    2    3    a [mm]

f [mm/U]

**Fig.14**

v = 800 m/min

0,3

0,2

0,1

E

S

0,5    1    2    3    a [mm]

Fig.15

# Fig.16

| Bandspäne | Wirrspäne | Flach-wendel-späne | Schräg-wendel-späne | lange zyl. Wendel-späne | kurze zyl. Wendel-späne | Spiral-wendel-späne | Spiral-späne | Spanlocken | Bröckel-späne |
|---|---|---|---|---|---|---|---|---|---|
| ungünstig | | | brauchbar | | gut | | | | |

0 083 357